# EUROPÄISCHE PATENTSCHRIFT

(11) **EP 0 558 811 B1**
(45) Veröffentlichungstag und Bekanntmachung des Hinweises auf die Patenterteilung: **19.04.1995**
(21) Anmeldenummer: 92120886.4
(22) Anmeldetag: 08.12.1992
(51) Int. Cl.: B23D 77/04

(54) **Einmesser-Reibahle**
Single insert reamer
Alésoir à plaquette unique

(30) Priorität: 31.01.1992 DE 4202751
(43) Veröffentlichungstag der Anmeldung: 08.09.1993
(73) Patentinhaber: MAPAL Fabrik für Präzisionswerkzeuge Dr. Kress KG, D-73405 Aalen (DE)
(72) Erfinder:
(74) Vertreter: Gleiss, Alf-Olav, Dr.jur. Dipl.-Ing.

(56) Entgegenhaltungen:
- EP-A- 0 099 995
- EP-A- 0 312 281
- EP-A- 0 410 342
- DE-A- 3 429 498
- DE-A- 4 007 175
- DE-A- 4 102 716
- US-A- 2 977 829

## Beschreibung

Die Erfindung betrifft eine Einmesser-Reibahle gemäß Oberbegriff des Anspruchs 1 (siehe z.B. EP-A 0 410 342). Einschneiden-Reibahlen der hier genannten Art dienen der Oberflächenbearbeitung von Bohrungen in Werkstücken. Zur Erzielung einer Bohrung mit optimalen Oberflächenqualitäten und sehr exakten Bohrungsdurchmessern wird eine Relativdrehung zwischen dem Werkstück und dem Werkzeug, der Reibahle, bewirkt und die Reibahle in die Bohrung eingeführt. Durch die Drehung des Werkzeugs trägt die Messerplatte, deren Schneide auf einem Flugkreis angeordnet ist, der größer ist als der Flugkreis der äußersten Oberfläche der Führungsleisten der Reibahle, von der Bohrungswand Späne ab. Dabei wird die Reibahle innerhalb der Bohrung von mindestens einer vorzugsweise zwei Führungsleisten geführt. Da die Schneide eine Schneidkraft auf die Bohrungswand ausübt, ist eine entsprechende Abstützkraft von den Führungsleisten aufzubringen. Durch die dadurch erzeugte Reibung der Führungsleisten an der Bohrungswand findet ein Aufschweißen von Material der bearbeiteten Bohrungswand auf den Führungsleisten statt und zwar besonders in den Bereichen der Führungsleisten, die unter hohem Druck an der Bohrungswand anliegen. Durch das auf die Führungsleisten aufgeschweißte Material wird der einmal eingestellte Durchmesser nicht mehr eingehalten. Überdies ist eine sichere Führung des Werkzeugs innerhalb der Bohrung nicht mehr gewährleistet, so daß Schwingungen auftreten, die zu einer unrunden Bohrung mit minderen Oberflächenqualitäten führt.

Es ist daher Aufgabe der Erfindung, eine Einmesser-Reibahle zu schaffen, die sich durch eine überaus lange Standzeit aufgrund einer geringeren Aufschweißneigung der Führungsleisten auszeichnet.

Diese Aufgabe wird bei einer Einmesser-Reibahle der eingangs genannten Art mit Hilfe der in Anspruch 1 aufgeführten Merkmale gelöst. Dadurch, daß die Anlagefläche mindestens einer Führungsleiste der Reibahle wenigstens bereichsweise Diamant aufweist, lassen sich die Aufschweißerscheinungen wesentlich reduzieren, so daß die gewünschten Eigenschaften der bearbeiteten Bohrung lange eingehalten werden. Das heißt, einerseits wird der vorgewählte Bohrungsdurchmesser, andererseits werden die Bohrungsoberflächeneigenschaften sicher eingehalten.

Bevorzugt wird eine Ausführungsform der Reibahle, deren eine Führungsleiste eine durchgehende Anlagebeziehungsweise Außenfläche aus Diamant aufweist. Während der Bearbeitung einer Bohrung kann es vorkommen, daß verschiedene Bereiche ihrer Außenfläche mit der Bohrungswand in Berührung treten. Wenn nun die gesamte Oberfläche aus Diamant besteht, ist sichergestellt, daß Aufschweißungen und damit der Verschleiß jedenfalls auf ein Minimum reduziert werden.

Bevorzugt wird eine Ausführungsform der Reibahle, bei der die Führungsleiste einen Grundkörper aus Metall, vorzugsweise aus Hartmetall aufweist, der mit einer durchgehenden Diamantauflage versehen ist. Derartige Führungsleisten sind mit bekannten Verfahren also preiswert herstellbar und zeichnen sich durch eine für die Einbringung in die Reibahle ausreichenden Stabilität aus, so daß bei der Montage derartiger Führungsleisten ein nur kleiner Ausschuß zu erwarten ist.

Besonders bevorzugt wird eine Reibahle, die zwei in ihrer Umfangswandung eingelassene Führungsleisten, von denen eine -in Drehrichtung der Reibahle gesehen- der Messerplatte um ca. 45° C nacheilend und eine der Messerplatte gegenüberliegend angeordnet ist, wobei die Anlageflächen beider Führungsleisten aus Diamant bestehen. Die der Messerplatte gegenüberliegende Führungsleiste wird besonders hohen Reibungskräften ausgesetzt. Es ist also wichtig, gerade diese Führungsleiste durch die Diamantbeschichtung verschleißarm auszubilden. Eine weitere Verminderung der Aufschweiß- und Verschleißerscheinungen läßt sich dadurch erzielen, daß auch die zweite, der Messerplatte nacheilende Führungsleiste mit Diamant belegt ist, so daß eine besonders hohe Standzeit des Werkzeugs gewährleistet ist.

Weitere Ausgestaltungen der Reibahle ergeben sich aus den übrigen Unteransprüchen.

Die Erfindung wird im folgenden anhand der Zeichnung näher erläutert. Es zeigen:
- Figur 1: eine Seitenansicht des vorderen Teils, des Messerkopfs, einer Reibahle;
- Figur 2: eine Stirnansicht einer Reibahle gemäß Figur 1;
- Figur 3: eine perspektivische Ansicht eines ersten Ausführungsbeispiels einer Reibahle und
- Figur 4: eine perspektivische Ansicht eines zweiten Ausführungsbeispiels einer Reibahle.

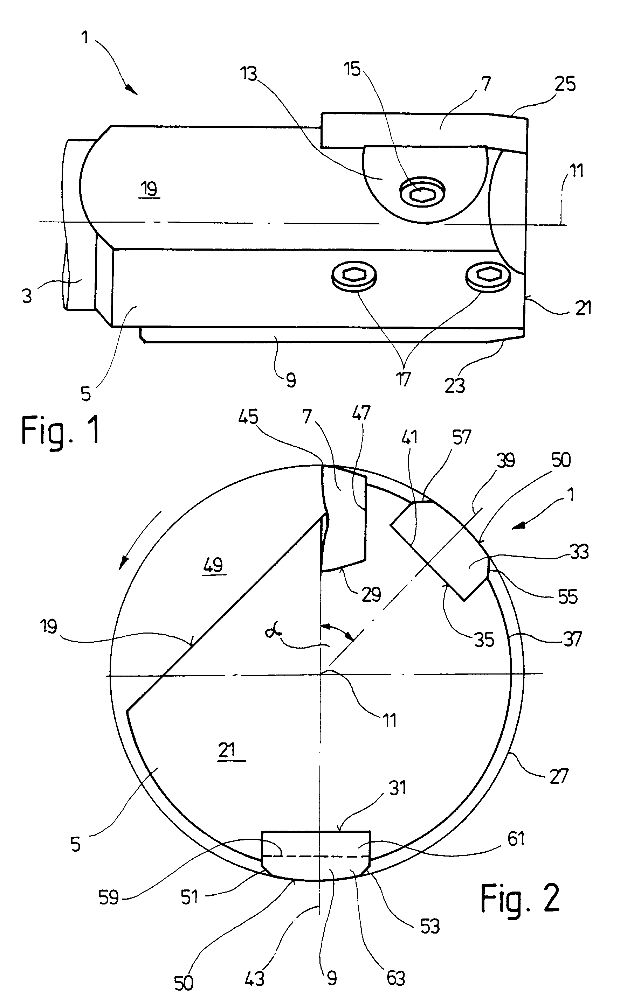

Aus der Seitenansicht gemäß Figur 1 ist eine Reibahle 1 ersichtlich, deren hier nur angedeuteter Schaft 3 in einen Messerkopf 5 übergeht. In die Umfangsfläche des Messerkopfs sind Nuten zur Aufnahme einer Messerplatte 7 und einer ersten Führungsleiste 9 eingebracht, deren Grundfläche im wesentlichen parallel zu der Mittel- beziehungsweise Drehachse 11 der Reibahle 1 verlaufen. Die Messerplatte 7 wird auf bekannte Weise mittels einer Spannpratze 13 festgeklemmt, die mit einer Spannschraube 15 befestigt ist. Die Reibahle 1 ist überdies mit zwei Justierschrauben 17 versehen, die der radialen Einstellung der Messerplatte 7 dienen und die auf bekannte Weise über Stellkeile auf die Unterseite der Messerplatte einwirken, so daß diese mehr oder weniger weit -in radialer Richtung gesehen-aus der Umfangsfläche des Messerkopfs 5 herausragt.

Der im wesentlichen zylindrisch ausgebildete Grundkörper des Messerkopfs 5 weist auf der Vorderseite der Messerplatte 7 eine Spanablaufschräge 19 auf, die der Bildung eines Spanraums dient, auf den unten noch näher eingegangen wird.

Bei der Reibahle 1 ist die Führungsleiste 9 so ausgebildet, daß sie in einem der Stirnseite 21 des Messerkopfs 5 zugewandten Bereich eine Anlaufschräge 23 aufweist. Auch die Messerplatte 7 ist in ihrem vorderen Bereich mit einer Schräge versehen, in deren Bereich die Hauptschneide 25 der Messerplatte 7 angeordnet ist.

Bei dem in Figur 1 dargestellten Ausführungsbeispiel ist die erste Führungsleiste 9 durchgehend ausgebildet. Das heißt, sie erstreckt sich von der Stirnseite 21 des Messerkopfs bis etwa zu dessen Endbereich. Die Länge der ersten Führungsleiste beziehungsweise deren Erstreckung in Richtung der Drehachse 11 ist also größer als die der Messerplatte 7.

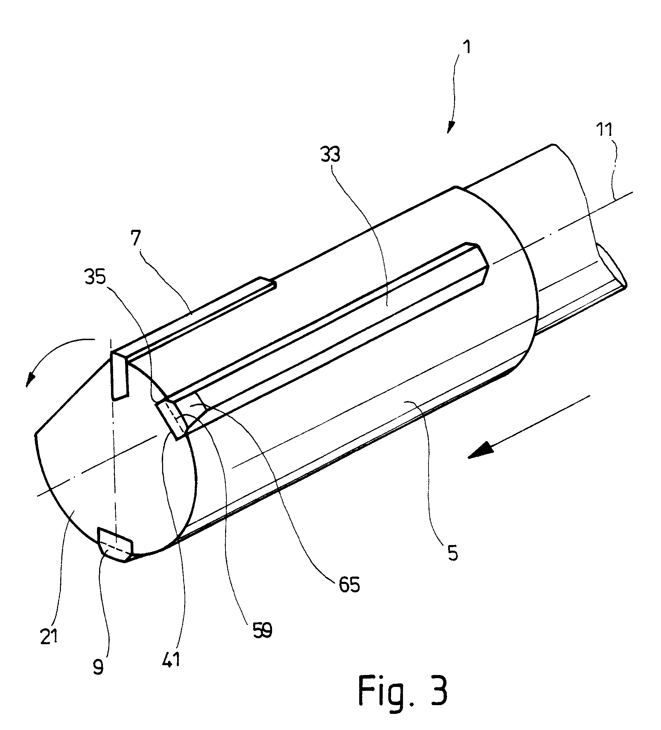

Figur 2 zeigt eine Vorderansicht der Reibahle 1, also eine Ansicht der Stirnseite 21 des Messerkopfs 5. Durch eine Kreislinie 27 wird die zu bearbeitende Bohrung angedeutet.

In dieser Darstellung sind Teile, die mit denen in Figur 1 übereinstimmen mit gleichen Bezugsziffern versehen, so daß auf die Beschreibung zu Figur 1 verwiesen wird.

Die Stirnansicht zeigt, daß die Messerplatte 7 in eine erste Nut 29, die erste Führungsleiste 9 in eine zweite Nut 31 und eine zweite Führungsleiste 33 in eine dritte Nut 35 eingebracht sind. Die zweite Führungsleiste 33 ist -in der durch einen Pfeil dargestellten Drehrichtung gesehen- der Messerplatte 7 nacheilend in die Umfangswandung 37 des Messerkopfs 5 eingebracht. Dabei schließt die Mittelachse 39, die durch die zweite Führungsleiste 33 verläuft, senkrecht auf dem Grund 41 der dritten Nut 35 steht und die Drehachse 11 der Reibahle 1 schneidet, mit der verlängerten Mittelachse 43, die durch die erste Führungsleiste 9 verläuft, einen Winkel α ein. Der Winkel α kann in einem Bereich von 30° bis 50° liegen, vorzugsweise werden etwa 40° bis 45°, hier 45° gewählt.

Die Verlängerung der Mittelachse 43 verläuft durch die mit der Bohrungswand beziehungsweise Kreislinie 27 in Eingriff stehenden aktiven Schneide 45 der Messerplatte 7, deren Rückseite 47 bei dem hier dargestellten Ausführungsbeispiel in etwa parallel zur Mittelachse 43 verläuft. Es ist auch möglich, daß die in der Darstellung gemäß Figur 2 unten liegende Schneide zurückspringt, also in einem Abstand zu der die aktive Schneide berührenden Mittelachse 43 angeordnet ist, wobei die Rückseite 47 also näher an die zweite Führungsleiste herangebracht wird.

Figur 2 zeigt, daß zwischen der Spanablaufschräge 19 und der Bohrungswandung beziehungsweise Kreislinie 27 ein Spanraum 49 verbleibt, durch den die während einer Drehung des Werkzeugs innerhalb der Bohrung von der aktiven Schneide 45 abgetragenen Späne abtransportierbar sind.

Die beiden Führungsleisten 9 und 33 sind an ihren Anlage- beziehungsweise Außenflächen 50 mit einer Krümmung versehen, die im wesentlichen der der Bohrungswandung beziehungsweise Kreislinie 27 entspricht. Vorzugsweise ist der Krümmungsradius der Führungsleisten etwas kleiner gewählt als der Flugkreisradius. Die Maße können so gewählt werden, daß der Krümmungsradius der Führungsleisten 1% bis 15% insbesondere 3% bis 5% kleiner ist als der Flugkreisradius.

Die Führungsleisten 9 und 33 weisen im Anschluß an ihre Außenflächen, die an der Bohrungswandung anliegen, mindestens entlang einer ihrer Längskanten verlaufende Fasen 51, 53, 55 und 57 auf. Insbesondere die in Drehrichtung gesehen vorderen Fasen 53 und 57 dienen dem Aufbau eines Schmierfilms, und zwar in den Fällen, in denen im Betrieb der Reibahle die zu bearbeitende Bohrung mit einem Kühl- und Schmiermittel versorgt wird, welches überdies auch dem Abtransport der Späne dienen kann. Besonders bei einer geringfügig kleineren Krümmung der Außenfläche der Führungsleisten wird ein sehr stabiler Schmierfilm aufgebaut.

An der der Messerplatte 7 gegenüberliegenden ersten Führungsleiste 9 ist eine Trennebene 59 angedeutet. Die Führungsleisten sind im Bereich ihrer Außenbeziehungsweise Anlageflächen, also im Bereich der Flächen, die bei der Bearbeitung einer Bohrung an der Bohrungswandung beziehungsweise der Kreislinie 27 anliegen, wenigstens bereichsweise aus Diamant ausgebildet. Insbesondere werden Führungsleisten verwendet, die einen Grundkörper 61 aus Metall, vorzugsweise aus Hartmetall aufweisen, auf den eine Diamantauflage 63 aufgebracht ist. Vorzugsweise wird eine Auflage aus Kunst- beziehungsweise Industriediamant verwendet.

Die Trennebene 59 verläuft parallel zu der gedachten, in Figur 2 angedeuteten Drehachse 11 und schließt mit der Mittelachse 43 einen rechten Winkel ein, die auf der Tennebene senkrecht steht und deren Mittelsenkrechte darstellt. Der Abstand der Trennebene 59 von der Drehachse 11 kann variiert werden. Es ist also beispielsweise möglich, daß lediglich in dem äußersten Bereich der Führungsleiste 9, der in unmittelbarer Nachbarschaft zu der Mittelachse 43 angeordnet ist, eine Diamantschicht vorgesehen ist. In diesem Fall verläuft die Trennebene 59 unmittelbar angrenzend an die Außenfläche beziehungsweise Anlagefläche 50 der Führungsleiste 9.

Die zweite Führungsleiste 33 kann äquivalent ausgebildet sein und ebenfalls eine Trennebene 59, einen Grundkörper 61 und eine Diamantauflage 63 aufweisen.

In dem Fall, in dem anstelle der Diamantauflage eine Diamantbeschichtung der Außen- beziehungsweise Anlagefläche der Führungsleisten vorgesehen ist, folgt -bei einer Beschichtung gleichmäßiger Dickedie Trennebene im wesentlichen der Außenkontur der Führungsleiste.

Figur 2 zeigt ein Ausführungsbeispiel einer Reibahle mit zwei identischen Führungsleisten.

Während der Bearbeitung einer Bohrung fällt die Drehachse 11 nicht mit dem Mittelpunkt der Bohrung zusammen, so daß in vielen Fällen die hintere Kante der zweiten Führungsleiste 33, also deren Anlagefläche unmittelbar vor der Fase 55, stark belastet wird, während der vordere Bereich der Anlagefläche der ersten Führungsleiste unmittelbar vor der Fase 53 einem starken Verschleiß unterliegt. Es ist also auch möglich, gerade diese Bereiche mit einer Diamantschicht beziehungsweise Diamantbeschichtung zu versehen und die Trennebene 59 innerhalb der Führungsleisten so anzuordnen, daß die gewünschten Verschleißbereiche eine Diamantauflage aufweisen.

Die perspektive Ansicht gemäß Figur 3 zeigt die in Figur 1 dargestellte Reibahle 1. Gleiche Teile sind mit gleichen Bezugszeichen versehen, so daß auf die Beschreibung oben verwiesen werden kann. Wie die erste Führungsleiste 9 ist auch die zweite Führungsleiste 33 durchgehend ausgebildet. Bei dem hier dargestellten Ausführungsbeispiel ist die Trennebene 59 der zweiten Führungsleiste 33 so nahe am Grund 41 der dritten Nut 35 angeordnet, daß die gesamte Außenfläche der zweiten Führungsleiste 33 aus Diamant besteht. Im vorderen Bereich der zweiten Führungsleiste 33, also in dem der Stirnseite 21 des Messerkopfs 5 zugewandten Ende der Führungsleiste, ist eine Anlaufschräge 65 vorgesehen, die auf diese Weise ebenfalls aus Diamant besteht und daher sehr verschleißfest ist. Beim Einführen der Reibahle 1 in eine Bohrung dreht sich die Reibahle, wie durch den Pfeil in Figur 3 angedeutet. Gleichzeitig findet eine Vorschubbewegung in Richtung des Doppelpfeils statt. Da die Messerplatte 7 -in Vorschubrichtung gesehen- den Führungsleisten voreilend angeordnet ist, kommt die Messerplatte als erstes mit der Wand der zu bearbeitenden Bohrung in Eingriff. Dadurch wird die Reibahle in Richtung der ersten Führungsleiste 9 abgedrängt, so daß diese als nächstes die Bohrungswand unter hohem Druck berührt und die Schnittkräfte abfängt. Aufgrund der Diamantschicht werden Aufschweißungen selbst bei der Bearbetiung von Aluminiumteilen und unter Verwendung sehr magerer Emulsionen sicher vermieden. Schließlich liegen beide Führungsleisten an der zu bearbeitenden Bohrungswand an, wenn die Reibahle 1 in diese weiter eingeführt wird, so daß sich das Werkzeug dort selbstätig zentriert.

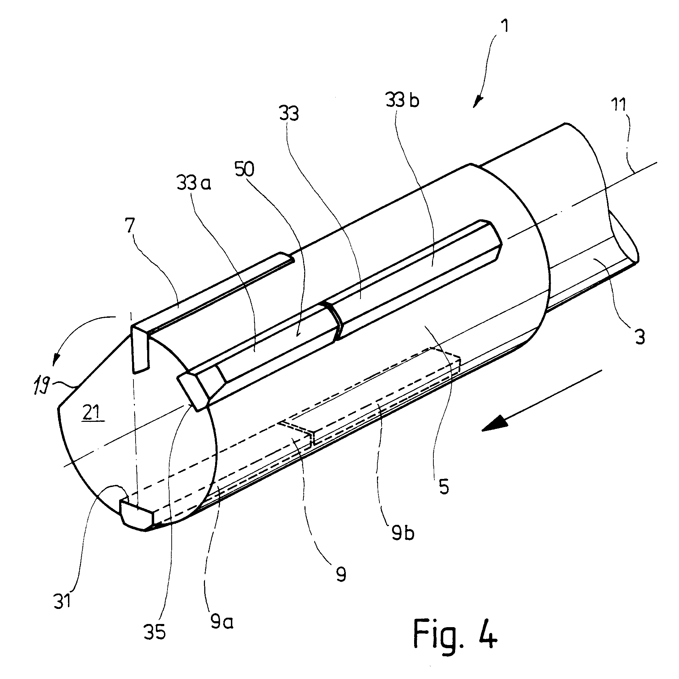

Das Ausführungsbeispiel gemäß Figur 4 ist grundsätzlich gleich aufgebaut wie das in Figur 3, so daß gleiche Teile mit gleichen Bezugszeichen versehen sind und auf deren ausführliche Beschreibung verzichtet wird.

Der wesentliche Unterschied zwischen beiden Ausführungsbeispielen besteht jedoch darin, daß bei dem in Figur 4 gezeigten die Führungsleisten 9 und 33 nicht aus einem durchgehenden Element bestehen, sondern ein Vorderteil 9a beziehungsweise 33a und ein rückwärtiges Teil 9b beziehungsweise 33b aufweisen. Das Vorderteil der beiden Führungsleisten ist einem besonders hohen Verschleiß unterworfen und daher auf seiner Außen- beziehungsweise Anlagefläche 50 mit einer Diamantschicht versehen. Das jeweils hintere Teil 9b beziehungsweise 33b der Führungsleisten besteht durchgehend, also bis zu Außen- beziehungsweise Anlagefläche aus Hartmetall und weist daher keinerlei Diamantschichten auf. Eine Reibahle dieser Ausgestaltung ist preiswerter als eine Ausführungsform mit durchgehendem, auf ihrer kompletten Außenseite mit Diamant beschichteten Führungsleisten gemäß Figur 3.

Besonders preiswert ist es, eine Einschneiden-Reibahle so auszugestalten, daß lediglich die der Messerplatte 7 gegenüberliegende erste Führungsleiste 9 in ihrem vorderen Bereich eine Diamantschicht aufweist, da in diesem Bereich die höchsten Reibungskräfte auftreten. Eine derartige Reibahle kann beispielsweise wie das in Figur 4 dargestellte Ausführungsbeispiel hergestellt werden: Die erste Führungsleiste weist ein Vorderteil 9a auf, welches auf seiner Außenseite beziehungsweise Anlagefläche eine Diamantschicht trägt. Das hintere Teil 9b dieser ersten Führungsleiste 9 besteht gänzlich aus Hartmetall. Auch die zweite Führungsleiste 33 besteht bei einer derartig preiswert gestalteten Reibahle gänzlich aus Hartmetall und ist vorzugsweise durchgehend ausgebildet, wie dies in Figur 3 ersichtlich ist. Insofern ergibt sich also eine Kombination der Ausführungsmöglichkeiten, wie sie anhand der Figuren 3 und 4 dargestellt sind: Die erste Führungsleiste 9 ist zweistückig ausgebildet, wie anhand von Figur 4 erläutert, während die zweite Führungsleiste 33 durchgehend ausgebildet ist, wie es in Figur 3 dargestellt ist.

Allen dargestellten Ausführungsbeispielen ist gemeinsam, daß die Führungsleisten 9 und 33 einen im wesentlichen rechteckigen Querschnitt aufweisen. Entsprechend sind die zugehörigen Nuten, die der Aufnahme der Führungsleisten dienen, ausgebildet. Die Maße der Nuten sind so gewählt, daß die Führungsleisten spielfrei einsetzbar sind. Es ist jedoch auch möglich, die Führungsleisten praktisch quadratisch auszubilden und in entsprechend ausgeformte Nuten einzubringen. Besonders bewährt hat es sich, die Führungsleisten im Grundkörper des Messerkopfs festzulöten. Es ist jedoch auch grundsätzlich möglich, die Führungsleisten in den Nuten einzukleben oder durch Formschluß zu halten. Bei einer Befestigung mittels Formschluß hat sich besonders ein im wesentlichen trapezförmiger Querschnitt der Führungsleisten bewährt, wobei deren Unterseite, die am Grund der zugehörigen Nuten aufliegt, breiter ist, als deren Außen- beziehungsweise Anlagenflächen. Entsprechend sind auch die die Führungsleisten aufnehmenden Nuten ausgebildet, wobei ein Formschluß zwischen Nut und Führungsleiste etwa nach Art einer Schwalbenschwanzverbindung geschaffen wird. Die Führungsleisten können zusätzlich zu dem Formschluß festgelötet oder -geklebt werden.

Es ist ohne weiteres ersichtlich, daß die Breite der Führungsleisten an die Belastungen während der Bearbeitung von Bohrungen anpaßbar ist. Dabei kann auch durch die Festlegung der Position der Trennebene 59 vorbestimmt werden, ob die Anlageflächen der Führungsleisten mehr oder weniger mit Diamant beschichtet sind beziehungsweise aus Diamant bestehen. Wenn also die Trennebene 59 sehr Nahe an dem Grund 41 einer Nut angeordnet ist, ist die Diamantschicht sehr dick, so daß dann auch die Anlaufschräge der Führungsleisten und deren Fasen aus Diamant bestehen beziehungsweise diamantbeschichtet ist. Durch die Verlagerung der Trennebene kann insbesondere auch sichergestellt werden, daß die Fasen 51, 53, 55 und/oder 57 durch Diamant gegen Verschleiß geschützt sind.

Ein optimaler Schutz der Führungsleisten gegen Verschleiß ist insbesondere dann gewährleistet, wenn zwischen der Diamantschicht und dem Grundkörper der Führungsleiste aus Metall, vorzugsweise Hartmetall, eine molekulare Verbindung besteht, wodurch eine praktisch unlösbare Verbindung gegeben ist.

Aus dem oben Gesagten ist ersichtlich, daß es in allen Fällen möglich ist, eine massive Diamantauflage oder eine Diamantbeschichtung zu wählen.

Allen Führungsleisten ist gemeinsam, daß ihre Außen- beziehungsweise Anlagefläche rundgeschliffen ist, wobei der Krümmungsradius der Außenfläche etwa dem des Flugkreises entspricht, wobei allerdings der Radius der Führungsleisten um 1% bis 15%, vorzugsweise etwa 3% bis 5% kleiner ist als der des Flugkreises. Es bildet sich bei einer derartigen Wahl der Krümmungsradien ein stabiler Schmierfilm zwischen Führungsleiste und Bohrungswand aus. Insbesondere entsteht zwischen Führungsleiste und Bohrungswand in dem -in Drehrichtung gesehen- vorderen Spalt ein stabiler Schmierfilm-Keil, der auch bei hohen Anlagekräften zwischen Führungsleiste und Bohrungswand nicht abgeschert wird. Die Bildung dieses Schmierfilm-Keils wird durch die entlang der Kanten der Führungsleisten verlaufenden vorderen Fasen noch gefördert.

## Patentansprüche

1. Einmesser-Reibahle mit einem Grundkörper in dessen Umfangswandung eine Messerplatte und mindestens eine in Längsrichtung des Grundkörpers verlaufende Nuten eingesetzte Führungsleiste eingebracht ist, **dadurch gekennzeichnet,** daß die Anlagefläche (50) der Führungsleiste (9,33) wenigstens bereichsweise Diamant umfaßt.

2. Reibahle nach Anspruch 1, **dadurch gekennzeichnet,** daß die Führungsleiste (9,33) eine durchgehende Anlagefläche (50) aus Diamant aufweist.

3. Reibahle nach Anspruch 1 oder 2, **dadurch gekennzeichnet**, daß die gesamte Außenfläche (50) der Führungsleiste (9,33) aus Diamant besteht.

4. Reibahle nach einem der vorhergehenden Ansprüche, **dadurch gekennzeichnet,** daß die Führungsleiste (9,33) einen Grundkörper (61) aus Metall, vorzugsweise Hartmetall, aufweist, der zumindest im Bereich der Anlagefläche (50) eine Diamantauflage (63) aufweist.

5. Reibahle nach einem der vorhergehenden Ansprüche, **dadurch gekennzeichnet,** daß die Führungsleiste (9,33) einen Grundkörper (61) aus Metall, vorzugsweise Hartmetall, aufweist, der mit einer durchgehenden Diamantauflage (68) versehen ist.

6. Reibahle nach einem der vorhergehenden Ansprüche, **dadurch gekennzeichnet,** daß zwischen dem Metallgrundkörper (61) und der Diamantauflage (68) der Führungsleiste eine molekulare Verbindung besteht.

7. Reibahle nach einem der vorhergehenden Ansprüche, **dadurch gekennzeichnet,** daß die Trennebene (59) zwischen Metall und Diamant im wesentlichen parallel zur Drechachse (11) der Reibahle (1) verläuft, und daß die Mittelsenkrechte auf dieser Ebene die Drehachse der Reibahle schneidet.

8. Reibahle nach einem der vorhergehenden Ansprüche, **dadurch gekennzeichnet,** daß die Führungsleiste (9) der Messerplatte gegenüberliegend angeordnet ist.

9. Reibahle nach einem der vorhergehenden Ansprüche, **gekennzeichnet durch** zwei Führungsleisten, von denen eine (9) der Messerplatte (7) gegenüberliegend und eine (33) -in Drehrichtung der Reibahle gesehen- der Messerplatte um 30° bis 50°, insbesondere um 40° bis 45°, vorzugsweise um ca. 45° C nacheilend angeordnet ist, und daß beide Führungsleisten im Bereich der Anlagefläche (50) eine Diamantauflage (88) aufweisen.

10. Reibahle nach Anspruch 9, **dadurch gekennzeichnet,** daß mindestens eine vorzugsweise beide Führungsleisten (9,33) mit einer durchgehenden Diamantauflage (63) versehen sind.

11. Reibahle nach einem der vorhergehenden Ansprüche, **dadurch gekennzeichnet,** daß die Führungsleiste (9,33) einen rechteckigen, quadratischen oder trapezförmigen Querschnitt aufweist.

12. Reibahle nach einem der vorhergehenden Ansprüche, **dadurch gekennzeichnet,** daß die Führungsleiste (9,33) in die zugehörige Nut (31,35) eingelötet ist.

13. Reibahle nach einem der vorhergehenden Ansprüche, **dadurch gekennzeichnet,** daß die Außenfläche (50) der Führungsleisten (9,33) rundgeschliffen ist.

14. Reibahle nach einem der vorhergehenden Ansprüche, **dadurch gekennzeichnet,** daß die Außenfläche (50) der Führungsleisten (9,33) einen Krümmungsradius aufweist, der kleiner ist -vorzugsweise um 3% bis 5%-, als der Flugkreis der Führungsleisten.

15. Reibahle nach einem der vorhergehenden Ansprüche, **dadurch gekennzeichnet,** daß entlang der Längskanten mindestens einer Führungsleiste (9,33) wenigstens eine Fase (51,53,55,57) vorgesehen ist.

16. Reibahle nach einem der vorhergehenden Ansprüche, **dadurch gekennzeichnet,** daß mindestens eine der Führungsleisten (9,33) zweiteilig ausgebildet ist und ein Vorderteil (9a;33a) und ein hinteres Teil (9b;33b) aufweist.

17. Reibahle nach einem der vorhergehenden Ansprüche, **dadurch gekennzeichnet,** daß das Vorderteil (9a;33a) der Führungsleiste (9,33) eine Diamantauflage aufweist.

18. Reibahle nach einem der vorhergehenden Ansprüche, **dadurch gekennzeichnet,** daß beide Teile (9a,9b;33a;33b) der Führungsleisten (9,33) eine Diamantauflage aufweisen.

19. Reibahle nach einem der vorhergehenden Ansprüche, **dadurch gekennzeichnet,** daß die Diamantauflage der Führungsleiste (9;33) eine Diamantbeschichtung aufweist oder eine Diamantbeschichtung ist.

20. Reibahle nach Anspruch 19, **dadurch gekennzeichnet,** daß die Diamantbeschichtung vorzugsweise auf die vorderen nahe der Stirnseite (21) der Reibahle (1) angeordneten Bereiche der Anlagefläche aufgebracht ist.

21. Reibahle nach Anspruch 19 oder 20, **dadurch gekennzeichnet,** daß die Trennebene zwischen Diamantbeschichtung und Grundkörper (61) der Reibahle (1) in etwa der Außenkontur der Anlagefläche der Reibahle (1) folgt.

## Claims

1. A single-cutter reamer, with a base body having in its peripheral wall a cutter plate and at least one guide strip inserted in grooves extending in the longitudinal direction of the body, **characterised in that** the contact surface (50) of the guide strip (9, 33) at least partially comprises diamonds.

2. A reamer in accordance with claim 1, **characterised in that** the guide strip (9, 33) has a continuous contact surface (50) comprising diamonds.

3. A reamer in accordance with claim 1 or 2, **characterised in that** the entire outer surface (50) of the guide strip (9, 33) comprises diamonds.

4. A reamer in accordance with one of the preceding claims, **characterised in that** the guide strip (9, 33) has a base body (61) made of metal, preferably hard metal, having a diamond layer (63) at least in the region of the contact surface (50).

5. A reamer in accordance with one of the preceding claims, **characterised in that** the guide strip (9, 33) has a base body (61) made of metal, preferably hard metal, provided with a continuous diamond layer (68).

6. A reamer in accordance with one of the preceding claims, **characterised in that** there is a molecular connection between the metal base body (61) and the diamond layer (68) of the guide strip.

7. A reamer in accordance with one of the preceding claims, **characterised in that** the dividing plane (59) between the metal and the diamonds extends substantially parallel to the rotational axis (11) of the reamer (1), and the mid-perpendicular of the said plane intersects the rotational axis of the reamer.

8. A reamer in accordance with one of the preceding claims, **characterised in that** the guide strip (9) is arranged opposite the cutter plate.

9. A reamer in accordance with one of the preceding claims, **characterised by** two guide strips, one (9) of which is arranged opposite the cutter plate (7) and the other (33) of which, when seen in the direction of rotation of the reamer, is arranged to lag behind the cutter plate by 30 to 50°, more particularly 40 to 45° and preferably approximately 45°, and both guide strips have a diamond layer (88) within the confines of the contact surface (50).

10. A reamer in accordance with claim 9, **characterised in that** at least one, and preferably both, guide strips (9, 33) are provided with a continuous diamond layer (63).

11. A reamer in accordance with one of the preceding claims, **characterised in that** the guide strip (9, 33) has a rectangular, square or trapezoidal cross-section.

12. A reamer in accordance with one of the preceding claims, **characterised in that** the guide strip (9, 33) is soldered into the associated groove (31, 35).

13. A reamer in accordance with one of the preceding claims, **characterised in that** the outer surface (50) of the guide strips (9, 33) is ground cylindrically.

14. A reamer in accordance with one of the preceding claims, **characterised in that** the outer surface (50) of the guide strips (9, 33) has a radius of curvature which is smaller, preferably by 3 to 5%, than the circular path of the guide strips.

15. A reamer in accordance with one of the preceding claims, **characterised in that** at least one chamfer (51, 53, 55, 57) is provided along the longitudinal edges of at least one guide strip (9, 33).

16. A reamer in accordance with one of the preceding claims, **characterised in that** at least one of the guide strips (9, 33) is formed in two parts, and has a front part (9a; 33a) and a rear part (9b; 33b).

17. A reamer in accordance with one of the preceding claims, **characterised in that** the front part (9a; 33a) of the guide strip (9, 33) has a diamond layer.

18. A reamer in accordance with one of the preceding claims, **characterised in that** both parts (9a; 9b; 33a; 33b) of the guide strips (9, 33) have a diamond layer.

19. A reamer in accordance with one of the preceding claims, **characterised in that** the diamond layer on the guide strips (9, 33) has a diamond coating or is a diamond coating.

20. A reamer in accordance with claim 19, **characterised in that** the diamond coating is preferably applied to the front regions of the contact surface, arranged in the vicinity of the end surface (21) of the reamer (1).

21. A reamer in accordance with claim 19 or 20, **characterised in that** the dividing plane between the diamond coating and the base body (61) of the reamer (1) substantially follows the outer profile of the contact surface of the reamer (1).

## Revendications

1. Alésoir monocoupe comprenant un corps de base, sur la paroi externe de laquelle une plaquette de coupe et au moins une barre de guidage sont insérées dans une rainure s'étendant en direction longitudinale du corps de base, caractérisé en ce que la surface (50) d'appui de la barre de guidage (9, 33) comporte au moins une partie en diamant.

2. Alésoir selon la revendication 1, caractérisé en ce que la barre de guidage (9, 33) a une surface d'appui continue (55) en diamant.

3. Alésoir selon la revendication 1 ou 2, caractérisé en ce que la surface d'appui (50) de la barre de guidage (9, 33) est en diamant.

4. Alésoir selon une des revendications précédentes, caractérisé en ce que la barre de guidage (9, 33) a un corps de base (61) en métal, de préférence durci, qui porte au moins dans la zone de la surface d'appui (50) un revêtement en diamant (63).

5. Alésoir selon une des revendications précédentes, caractérisé en ce que la barre de guidage (9, 33) a un corps de base (61) en métal, de préférence durci, portant un revêtement continu en diamant (63).

6. Alésoir selon une des revendications caractérisé en ce qu'entre le corps de base métallique (61) et le revêtement en diamant (63) de la barre, existe une liaison moléculaire.

7. Alésoir selon une des revendications précédentes, caractérisé en ce que le plan de séparation (59) entre le métal et le diamant est sensiblement parallèle à l'axe de rotation (11) de l'alésoir (1), la verticale à ce plan en son centre coupe l'axe de rotation (11) de l'alésoir.

8. Alésoir selon une des revendications précédentes, caractérisé en ce que la barre de guidage (9) est disposé à l'opposé de la plaquette de coupe

9. Alésoir selon une des revendications précédentes, caractérisé en ce qu'il comporte deux barres de guidage, dont l'une (9) est disposée à l'opposé de la plaquette de coupe (7), l'autre (33) est disposée, par rapport au sens de rotation de l'alésoir, décalée de la plaquette, à une distance angulaire de celle-ci comprise entre 30 et 50°, en particulier 40 à 45° et de préférence 45° environ, les deux barres portant un revêtement en diamant (63) dans la zone de leurs surfaces d'appui (50).

10. Alésoir selon la revendication 9, caractérisé en ce qu'au moins une barre de guidage (9, 33), et de préférence les deux, porte un revêtement continu en diamant.

11. Alésoir selon une des revendications précédentes, caractérisé en ce que la barre de guidage (9, 33) présente une section rectangulaire, carrée ou trapézoïdale.

12. Alésoir selon une des revendications précédentes, caractérisé en ce que la barre de guidage (9, 33) est brasée dans sa rainure (31, 35).

13. Alésoir selon une des revendications précédentes caractérisé en ce que la surface externe (50) des barres d'appui (9, 33) est rectifiée selon une section circulaire.

14. Alésoir selon une des revendications précédentes, caractérisé en ce que la surface externe (50) des barres (9, 33) présente un rayon de courbure inférieur, de préférence de 3 à 5 %, à celui de la trajectoire dans l'espace des barres de guidage.

15. Alésoir selon une des revendications précédentes, caractérisé en ce qu'il est prévu, le long des bords longitudinaux d'au moins une barre de guidage (9, 33), un biseau (51, 57, 55, 57).

16. Alésoir selon une des revendications précédentes, caractérisé en ce qu'au moins une des barres de guidage est réalisé en deux parties, une partie avant (9a ; 33a) et une partie arrière (9b, 33b).

17. Alésoir selon une des revendications précédentes, caractérisé en ce que la partie avant (9a ; 33a) de la barre de guidage (9, 33) porte un revêtement en diamant.

18. Alésoir selon une des revendications précédentes, caractérisé en ce que les deux parties (9a, 9b; 33a, 33b) des barres de guidage (9, 33) portent un revêtement en diamant.

19. Alésoir selon une des revendications précédentes, caractérisé en ce que le revêtement en diamant de la barre de guidage (9 ; 33) comporte une couche en diamant ou est une couche en diamant.

20. Alésoir selon la revendication 19, caractérisé en ce que la couche en diamant est déposée de préférence sur les zones de la surface d'appui situées en avant, près de la face frontale (21) de l'alésoir (1).

21. Alésoir selon la revendication 19 ou 20, caractérisé en ce que le plan de séparation entre la couche de diamant et le corps de base (61) de l'alésoir (1) suit sensiblement le profil externe de la surface d'appui de l'alésoir (1).
